# EUROPEAN PATENT APPLICATION

(11) **EP 1 341 113 A2**
(43) Date of publication of application: **03.09.2003**
(21) Application number: 03004080.2
(22) Date of filing: 25.02.2003
(51) Int. Cl.: G06F 17/60

(54) **A system for issuing securities and a method for forming a new market**

(30) Priority: 27.02.2002 JP 2002051085; 11.03.2002 JP 2002065123
(71) Applicant: Sato, Michihiro, Tokyo 102-0076 (JP)
(72) Inventor: Sato, Michihiro, Tokyo 102-0076 (JP)
(74) Representative: Hofer, Dorothea, Dipl.-Phys.

(57) **Abstract**

A securities issuing system equipped with a server provided in a securities issuing institution, clients used by the users of user institutions, a securities issuing machine provided at a securities issuing site, and ID recording media on which user ID information concerning individual users in each user institution is recorded, wherein
the server of the securities issuing institution has information transmitting function, purchase offer receiving function, wait instructing function, information accumulating function, and a post-issue lump sum settling function;
the client has purchase offer function; and
the securities issuing machine at the securities issuing site has ID reading function, collating function, issuing function, and issuing result transmitting function.

The invention also provides a securities issuing system that issues securities for obtaining funds from private sectors and a new market forming method by trading securities issued by said securities issuing system.

## Description

### BACKGROUND OF THE INVENTION

### Field of the Invention:

The present invention relates to a system for issuing securities and a method for forming a new market by means of circulating the securities issued by said system of issuing securities.

The term "public works" as it is used herein includes not only public works in the conventional sense, i.e., works planned by either the national Government of Japan or a local government in Japan singularly, which are executed by either the national Government of Japan or said local government in Japan singularly, but also public works planned by either the national Government of Japan, a public entity, or a private enterprise of Japanese nationality, as well as either the national government of a foreign country, a public entity, or a private enterprise of foreign nationality, either singularly by one of them, or jointly by two or more of them, which are executed by either the national Government of Japan, said public entity, or said private enterprise of Japanese nationality, as well as either the national government of the foreign country, said public entity, or said private enterprise of foreign nationality, either singularly by one of them, or jointly by two or more of them.

The term "infrastructure improvement projects" as it is used herein includes constructions and operations of public facilities such as roads, railways, harbors, airports, rivers, parks, public water supply systems, public sewage systems, and public industrial water supply systems; constructions and operations of facilities for government uses such as government buildings and housings; constructions and operations of facilities for public benefits such as public housings, educational and cultural facilities, waste processing facilities, healthcare facilities, social benefit facilities, welfare facilities, parking facilities, and underground commercial facilities; constructions and operations of information and communication facilities, heat energy supply facilities; new energy facilities; recycling facilities (except waste processing facilities), sightseeing facilities, and research facilities; and constructions and operations of commercial buildings annexed to railway stations and other commercial buildings.

### Description of Related Art:

### [Government-guaranteed Bond, Project Finance, PFI]

Constructions and operations of public facilities such as roads and railroads, facilities for public benefits such as healthcare facilities and social benefit facilities are of great concerns of the residents who live in the related area, as they affect the basics of their life. It is difficult for them to walk or drive without decent roads. It is impossible for them to receive healthcares if there are no hospitals and other healthcare facilities when they get sick.

Therefore, those who live in an area where facilities that affect the basics of residents' life, i.e., infrastructures (basic facilities of a society) are poor try to move to another area where infrastructures are better. This creates a tendency for population concentration in big cities where those infrastructures are well established, for example, Tokyo and Osaka in case of Japan. The concentration of population causes problems such as longer commuting time, higher rents, smaller living quarters, and excessive traffic congestions.

Thus, each country of the world is planning to improve infrastructures such as roads and healthcare facilities in various regions in the country, but it is also true that the governments are experiencing severe financial tightness everywhere in the world in recent years . Thus they are having difficulties in financing public works such as infrastructure improvement projects from tax revenues alone. It is indispensable to infuse some private funds into public works such as infrastructure improvement projects in order to alleviate the burden on tax money under the current financial tightness.

As a means of acquiring private funds for investments in public works, a national or local government issues bonds. Bonds are essentially negotiable papers issued for acquiring funds from a wide range of citizens. If issuers of bonds are a national or local government or an institution related to a government, the bonds are called public bonds.

In such public bonds, there has been a type of bonds issued for the purpose of acquiring private funds for public works such as infrastructure improvement projects. Such bonds are called government guaranteed bonds. Government guaranteed bonds are bonds whose issuer's liabilities for the repayment of the principal and related interests are guaranteed by the pertinent government.

On the other hand, if the issuing bodies are private enterprises, the bonds are called industrial bonds. Some of these industrial bonds in Japan are related to what is called the Special Purpose Company ("SPC") Law ("Law Concerning Securitization of Specified Assets by Special Purpose Companies").

Bonds covered by the SPC Law are bonds related to so-called "project finance." Bonds related to project finance are bonds issued for acquiring funds for executing a specific project. For example, if the use of the capital acquired by a bond issued in relation to the construction and operation of a commercial building to be erected in front of a railway station is specified for the project of "construction and operation of the station front building", said bond is regarded as a bond related to the project finance and a bond related to the SPC Law.

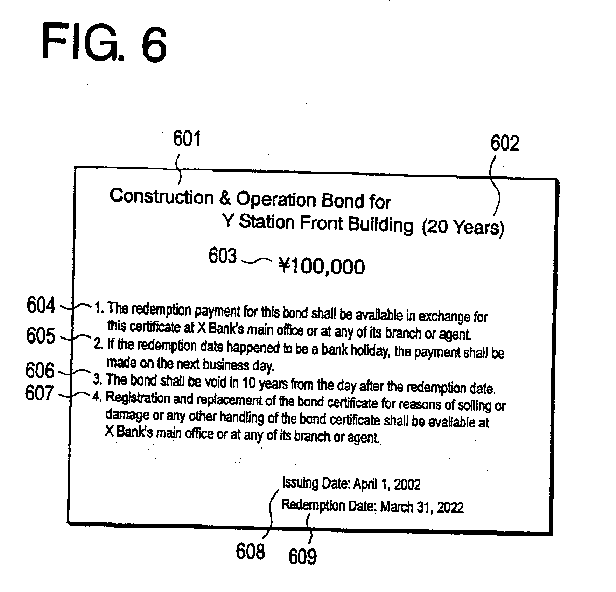

Fig. 6 shows an example of a bond related to the SPC Law, i.e., a bond related to project finance.

On the face of the bond certificate related to the SPC Law shown in Fig. 6, a wording 601 of "Construction & Operation Bond for Y Station Front Building", a wording 602 of "20 Years", a wording 603 of "¥100,000", a wording 604 of "The redemption payment for this bond shall be available in exchange for this certificate at X Bank's main office or at any of its branch or agent", a wording 605 of "If the redemption date happened to be a bank holiday, the payment shall be made on the next business day", a wording 606 of "The bond shall be void in 10 years from the day after the redemption date", a wording 607 of "Registration and replacement of the bond certificate for reasons of soiling or damage or any other handling of the bond certificate shall be available at X Bank's main office or at any of its branch or agent", a wording 608 of "Issuing Date: April 1, 2002", and a wording 609 of "Redemption Date: March 31, 2022" are written.

The wording 601 of "Construction & Operation Bond for Y Station Front Building" indicates that this bond is a bond covered by the SPC law. In other words, the wording 601 clarifies that the bond relates to the construction and operation of the station front building.

The wording 602 of "20 Years" indicates that the principal and the interest shall be redeemable in 20 years from the issuing date. The wording 603 of "¥100,000" indicates the amount of fund obtained by the issue of this bond.

The wording 604 of "The redemption payment for this bond shall be available in exchange for this certificate at X Bank' s main office or at any of its branch or agent" clarifies the locations of redemption. The wording 604 also clarifies that the principal and the interest will be paid in exchange for the bond certificate.

The wording 605 of "If the redemption date happened to be a bank holiday, the payment shall be made on the next business day" clarifies the payment shall be made on the next business day as it is not clear when the payment of the principal and the interest will be made if the redemption date falls on a bank holiday.

The wording 606 of "The bond shall be void in 10 years from the day after the redemption date" clarifies that the bond shall be void after a period. The wording 607 of "Registration and replacement of the bond certificate for reasons of soiling or damage or any other handling of the bond certificate shall be available at X Bank's main office or at any of its branch or agent", clarifies how the bond certificate is handled in case of need for registration and replacement of the bond certificate for reasons of soiling or damage.

The wording 608 of "Issuing Date: April 1, 2002" clarifies the issuing date. The wording 609 of "Redemption Date: March 31, 2022" clarifies the redemption date.

While bonds covered by the SPC Law, for example, bonds such as the one shown in Fig. 6 for project financing, in particular, for projects of public works such as infrastructure improvements by a private enterprise have not be heard of, those for projects such as operations of hotels by a private enterprise or operations of rental commercial buildings by a private enterprise have been well known.

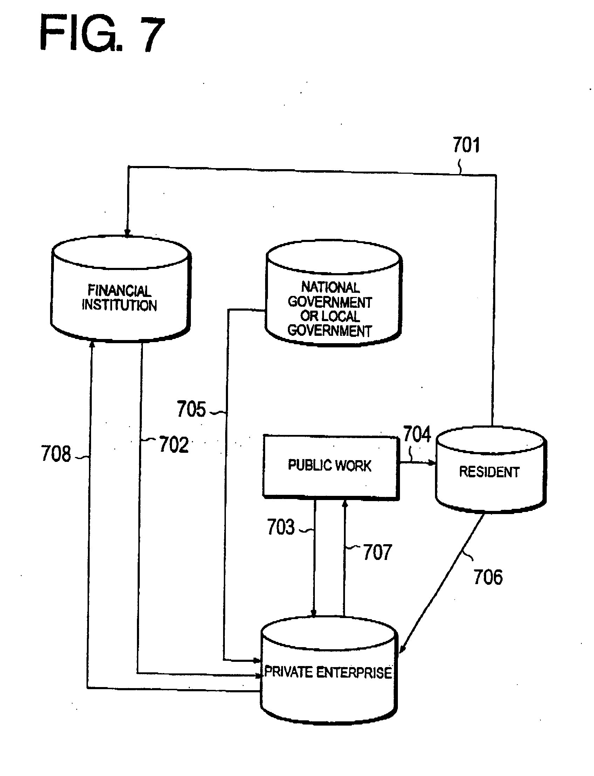

Fig. 7 is a diagram showing PFI (Private Finance Initiative; improvement of social overhead capitals using private funds).

PFI is intended to efficiently and effectively improve social overhead capitals by means of promoting constructions, maintenances and operations (including planning thereof) of public facilities utilizing private funds, management capabilities and technological capabilities so as to contribute to healthy development of national economy (Article 1 of Law concerning Promotion of Improvement of Public Facilities, etc., Utilizing Private funds, etc.).

The relation between a private enterprise, a national or local government, residents, and banks or securities companies, etc. (hereinafter called "financial institutions") in a scheme of PFI is as shown in Fig. 7.

A private enterprise prepares funds by borrowing money from a financial institution (702), executes construction and operation of a public facility such as a road, a prison, or a public housing (703) to provide public services to residents (704).

A national or local government pays considerations to said private enterprise for the services the enterprise provides to the residents on behalf of the national or local government (705). For example, if the public service is the operation of a prison, the national or local government pays considerations to the private enterprise for operating the prison on behalf of the national or local government (705).

The residents receive the services provided by said private enterprise (704) and pay the considerations for the services or service fees (706), and the private enterprise obtains income/profit through its involvement in the public works (707). The residents in return deposit money in the financial institution (701), and the financial institution lends money as investment to the private enterprise (702) and receives the repayment of the principal and the payment of the interest (708).

Thus, PFI is a means, which has been known for private enterprises for obtaining funds from private financial institutions for the purpose of conducting public works such as infrastructure improvement projects. Also known in PFI is a method of obtaining funds through bond issues instead of borrowing money from financial institutions.

### [Stocks and Bonds]

Stocks are well-known securities that represent the status or rights of stockholders. A company issues stocks that represent stockholders' status and rights in return for obtaining funds from the stockholders. A person who bought a stock (i.e., a stockholder) is qualified to participate in the management of a company because the person has a certain right and status as the stockholder. A stockholder is entitled to attend stockholders meetings, vote, and ask the company which issued the stock to pay dividends.

Furthermore, a stockholder can sell a stock to a third party. If the stockholder sell it at a price higher than the price paid for purchasing it, the stockholder earns a profit equivalent to the difference in the prices.

Bonds are also well-known securities that are issued by a national or local government, a legal entity or enterprise established under a special law in exchange for joint debts from the public. The redemption date for a bond is predetermined and the bond issuer pays the principal and the interest to the holder of the bond on the redemption date. The buyer of a bond can also sell the bond and earn a profit equivalent to the difference in the prices.

As shown above, government-guaranteed bonds, project finance-related bonds, PFI-related bonds, stocks and bonds have been known as securities.

### [Problems Concerning Government-Guaranteed Bonds, Project Finance and PFI]

There is a problem, however, as shown below in the abovementioned government guaranteed bonds, project finance bonds and PFI. For example, in case of government guaranteed bonds, a government guarantees the bond issuer's liabilities of repayment of principals and interests, but there is no limit to the degree of guarantee, so that it ends up wasting a large some of tax money in fulfilling its guaranteed obligations. Therefore, it is difficult to improve necessary infrastructures using government guaranteed bonds under a tight financial condition.

In case of project finance bonds, there is a problem that bond buyers are generally reluctant in buying bonds intended for public works projects to be executed by a private enterprise, because, when a private enterprise, which issued project finance bonds, fails in operating public works and the performance deteriorates, there is no guaranty for repayment to the buyers of said project finance bonds. Therefore, it is also difficult to improve necessary infrastructures using project finance bonds as well under a tight financial condition.

Moreover, in case of PFI, investments by financial institutions to a private enterprise are generally insufficient, because the credibility of a private enterprise, which engages in risky public works, is generally too low. Therefore, it is difficult to introduce private funds into public works through PFI because there is no guaranty for repayment for the bond issuers' liabilities for principal and interest repayment liabilities similar to the case of project finance bonds. Hence it is also difficult to improve necessary infrastructures using PFI under a tight financial condition.

### [Problems Associated with Stocks and Bonds]

Further, stocks and bonds have the following problems. An enterprise may not be able to obtain a sufficient amount of funds just by issuing stocks. Also, an enterprise that has issued bonds is obligated to pay back the principal plus interest on the redemption date. Thus, trying to obtain funds by issuing bonds places a substantial burden on an enterprise.

### SUMMARY OF THE INVENTION

On the other hand, creating of a new financial product different from stocks and bonds will provide a new chance of earning profits for investors who trade stocks and bonds.

Therefore, an intension of the present invention is to provide a securities issuing system for issuing bonds for obtaining funds from private sectors to promote investments in public works projects for improving infrastructures even in a society under a depressed financial situation, as well as a new market forming method that enables the bonds issued by said securities issuing system to be marketed.

Another intention of the present invention is to provide a securities issuing system for issuing bonds, which does not specify the redemption date although the dividend, interest and guaranty are stated, thus providing a new means for enterprises to obtain funds more easily, and a new financial product for investors, different from stocks and bonds, for earning profits through transactions, as well as a new market forming method that enables the bonds issued by said securities issuing system to be marketed.

The above intentions can be obtained by the following means:
(1) A securities issuing system comprising a server provided in a securities issuing institution, a client provided in a user institution, and a securities issuing machine provided at a securities issuing site; wherein
   said server comprises:
   a securities information transmitting means for transmitting securities information indicating what kind of securities are being issued to said client;
   a securities purchase offer information receiving means for receiving securities purchase offer information concerning request for purchasing securities from said client which has received the securities information transmitted by said securities information transmitting means directly or indirectly through a server of financial institution;
   a securities issuing means for issuing securities related to the securities purchase offer information received by said securities purchase offer information receiving means;
   an ID information receiving means for receiving user's individual ID information, which is the ID information of a user of said user institution, as well as user institution ID information, which is the ID information of said user institution, from said clients directly or through the server of financial institution;
   a security issuing information and user's individual ID information transmitting means for transmitting the securities issuing information related to the securities issued by said securities issuing means and the user's individual ID information received by said ID information receiving means to said securities issuing machine;
   a securities issuing result information receiving means for receiving securities issuing result information, which is the result of issuing securities, from said securities issuing machine;
   a securities issuing result information accumulating means for accumulating the securities issuing result information received by said securities issuing result information receiving means; and
   a calculating means for calculating fees to be charge to the user for each user institution based on the user institution ID information received by said ID information receiving means;
   said client comprises:
   a security purchase offer transmitting means for transmitting the securities purchase offer information to said server directly or indirectly through the server of the financial institution; and
   an ID information transmitting means for transmitting the user institution ID information and the user's individual ID information directly or indirectly through the server of the financial institution; and
   said securities issuing machine comprises:
   a securities issuing information receiving means for receiving the securities issuing information from said server;
   a user's individual ID information receiving means for receiving the user's individual ID information from said server;
   an ID reading means for reading the user's individual ID information from an ID recording medium, which stores said user's individual ID information;
   a collating means for collating the user's individual ID information received by said user's individual ID information receiving means with the user's individual ID information read by said ID reading means;
   a securities issuing means for issuing securities related to the securities issuing information received by said securities issuing information receiving means based on the result of the collation by said collating means; and
   a securities issuing result information transmitting means for transmitting the securities issuing result information, which is the result of issuing securities by said securities issuing means, to said server.
(2) A securities issuing system described in (1), wherein
   said securities are bonds for obtaining funds from private sectors, which are issued by said securities issuing institution in order to promote investments of private funds into public works for improving infrastructures, carrying a wording that the Government of Japan, a public entity, or a private enterprise of Japanese nationality, as well as the national government of a foreign country, a public entity, or a private enterprise of foreign nationality, either singularly by one of them, or jointly by two or more of them, serves as a guarantor or guarantors within a predetermined limit for principal reimbursement and interest payment liabilities to be born by said securities issuing institution, wherein
   said public works for improving infrastructures are:
   planned by either the national Government of Japan, a public entity, or a private enterprise of Japanese nationality, as well as either the national government of a foreign country, a public entity, or a private enterprise of foreign nationality, either singularly by one of them, or jointly by two or more of them; and
   executed by either the national Government of Japan, a public entity, or a private enterprise of Japanese nationality, as well as either the national government of a foreign country, a public entity, or a private enterprise of foreign nationality, either singularly by one of them, or jointly by two or more of them.
(3) A securities issuing system described in (1), wherein said securities are securities issued for acquiring funds by a business operator in exchange for said certificates of securities, on which written are:
   a dividend wording describing that said business operator will distribute profits obtained as a result of business activities to persons who own said certificates of securities;
   an interest wording describing that said business operator will pay interests periodically to said persons who own said certificates of securities; and
   a warranty wording describing that that the Government of Japan, a public entity, or a private enterprise of Japanese nationality, as well as the national government of a foreign country, a public entity, or a private enterprise of foreign nationality, either singularly by one of them, or jointly by two or more of them, serves as a guarantor or guarantors within a predetermined limit for principal reimbursement and interest payment liabilities to be born by said securities issuing institution in case said business operator becomes unable to pay the interests according to the interest payment wording due to reasons such as a business failure.
(4) A securities issuing system described in (1), wherein said securities issuing institution is a private urban development organization.
(5) A method for forming new market comprising making a person who has never purchased securities purchase securities issued by a securities issuing system described in (1), and trade those securities in the market as needed.

The present invention provides a means of issuing bonds related to project financing, where projects are public works such as infrastructure improvement projects. A person who wishes to purchase such a bond is able to see the contents of the public works to which the person is investing. Since the person can select the public works at will, in which his/her money is to be invested, this method enhances his/her desires for purchasing the bonds. Moreover, since the person's investment will never be used in public works to which he/her objects, the investor can purchase bonds with more confidence. The present invention provides a private enterprise trying to execute public works such as infrastructure improvement projects a means of acquiring large sums of funds from private sectors to be invested into said public works such as infrastructure improvement projects through bond issuing.

This is because those who are buying bonds can be assured for the repayment as the principal and interests repayment liabilities of the bond issuers are warranted to certain fixed limits by the Government of Japan, a public entity, or a private enterprise of Japanese nationality, either singularly by one of them, or jointly by two or more of them so that the bond buyers are guaranteed to be able to collect the principal and interests safely within certain fixed limits even when the a private enterprise fails in the operation of said public works.

Moreover, the present invention provides a means of preventing the Government of Japan, a public entity, or a private enterprise of Japanese nationality from wasting tax money, because the warrants for the bond issuers' principal and interest repayment liabilities by the Government of Japan, a public entity, or a private enterprise of Japanese nationality, as well as the government of a foreign country, or a public entity of foreign nationality, are limited to certain levels that are determined fairly by an independent public institution.

Thus, the Government of Japan, a public entity, or a private enterprise of Japanese nationality, as well as the government of a foreign country, or a public entity of foreign nationality are not obliged to bear the full amounts of the bond issuers' principal and interests repayment liabilities when the operations of public works such as infrastructure improvement projects by a private enterprise fail as in the case of government guaranteed bonds.

Moreover, since securities that are not bound by the concept of redemption dates can be issued according to the present invention, a business operator can operate without having to bear the burden of principal repayment realistically speaking.

The owner of the securities issued under the present invention is eligible for dividends. He/she can earn interests as well. Furthermore, the owner of the securities is guaranteed for the repayment of the principal of the funds provided to the business operator by the Government of Japan, a public entity, or a private enterprise of Japanese nationality, as well as the government of a foreign country, or a public entity of foreign nationality either singularly by one of them, or jointly by two or more of them within a predetermined limit, if the business operator who issued the securities becomes unable to pay interests in accordance with the interest wording due to bankruptcy or poor business .

The securities issued according to this invention are a new kind of financial product which did not exist before. This product encourages people who have never bought securities to buy securities. Therefore, the invention can create a new financial market.

According to the invention, user institutions can apply for securities purchases through their clients, so that securities buyers can buy securities from their homes and offices.

According to the invention, the clients of the present securities issuing system are installed in each user institution, so that it is easy to control the securities purchase status by each user institution, and various services can be offered by each user institution to attract customers.

A user institution here means a securities company, a bank, a private enterprise, or a general buyer of securities. According to this invention, the users of this securities issuing system can purchase the securities without having to have cash at hand as long as the users have ID recording media.

### BRIEF DESCRIPTION OF THE DRAWINGS

Fig. 1 is a diagram showing a securities issuing system according to a preferred embodiment of the present invention.
Fig. 2 shows a first example of securities issued by the securities issuing system according to the embodiment of the present invention.
Fig. 3 is a diagram showing development and operation of a public work (hospital) based on the first example of securities issued by the securities issuing system according to the embodiment of the present invention.
Fig. 4 shows a second example of securities issued by the securities issuing system according to the embodiment of the present invention.
Fig. 5 shows a third example of securities issued by the securities issuing system according to the embodiment of the present invention.
Fig. 6 shows an example of securities related to the SPC Law.
Fig. 7 is a diagram showing PFI.

### DESCRIPTION OF THE PREFERRED EMBODIMENTS

A preferred embodiment of the present invention will be described below with reference to the accompanying drawings.

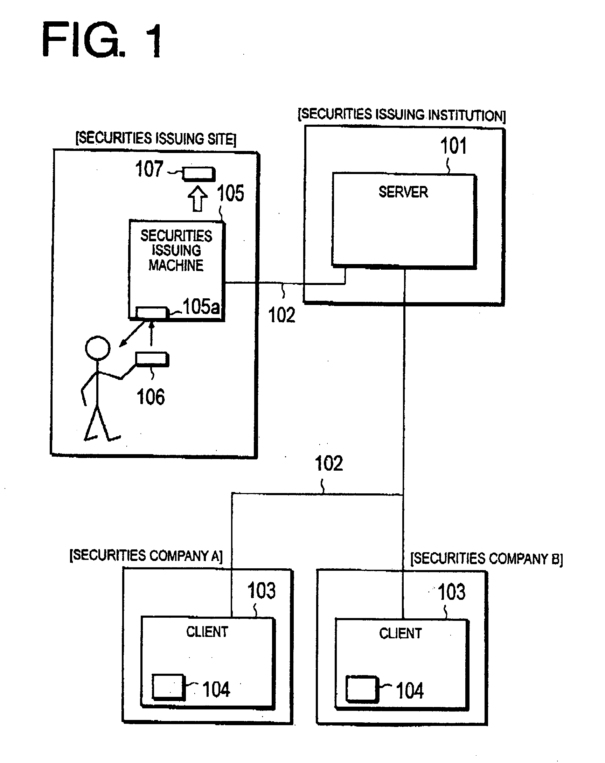

Fig. 1 is a securities issuing system according to the embodiment of the invention. As shown in Fig. 1, the securities issuing system according to this embodiment is equipped with: a server 101 provided in a securities issuing institution that issues securities based on securities purchase offers; a client 103 provided in each user institution, which is connected to said server via a telephone line 102; a securities issuing machine 105, which is provided in each securities issuing site and which is connected to said server 101 via the telephone line 102; and ID recording media 106.

The client 103 can be realized by a computer such as a general purpose computer, a dedicated terminal, an office computer, or a personal computer.

Dedicated securities purchase offer software 104 as well as various other kinds of application software are installed on the client 103.

When the securities purchase offer software 104 is activated, the client 103 is enabled to communicate with the server 101 and send securities purchase offers to the server 101. The securities purchase offer software 104 is typically lent by the security issuing institution to each user institution free of charge and is set up in such a way as to make securities purchase offers easier and smoother.

The client 103 with its securities purchase offer software 104 running transmits (displays) information concerning the securities to be purchased and ID information concerning user individuals and said user institution to the server 101 in order to make securities purchase offers easier and smoother (purchase request function).

The ID information concerning user individuals and said user institution transmitted from the client 103 to the server 101 at the time of requesting securities purchase is stored in an ID recording medium 106 as the user ID information. Although the ID recording medium 106 used in this embodiment is an ID card, the mode of the invention is not limited to it.

In the meantime, the server 101 of the securities issuing institution establishes a securities purchase offer based on the securities purchase offer received from the client 103 (purchase request accepting function). For example, the server 101 searches if there are any unsold securities of the particular securities based on the securities information received from the client 103, and establishes the securities purchase offer immediately if there are any unsold ones, or notifies the client 103 that there are no securities to be sold if that is the case.

It is so set up that the securities purchase offer will not be established even if there are unsold securities are available if the ID information from the client 103 was not properly transmitted.

When a securities purchase offer is established, the server 101 transmits the securities purchase information concerning the deal as well as the ID information concerning said securities purchase offer to the securities issuing machine 105 provided in the securities issuing site (wait instructing function).

The securities issuing machine 105 at the securities issuing site has an slot 105a for inserting (inputting) the ID recording medium 106, and is capable of reading the user's ID information recorded on said ID recording medium when the ID recording medium 106 is inserted (inputted) into the slot (ID reading function).

It then collates the user's ID information read from the medium with the ID information received from the server (collating function), and issues the securities 107 based on the corresponding securities purchase offer information based on the collation result (issuing function) . It further transmits the fact of the securities issue to the server 101 as the security issue result information (issue result transmitting function).

The issuing result information of the securities 107 transmitted from the securities issuing machine 105 to the server 101 is accumulated on the database in the server 101 (information accumulating function).

The server 101 of the securities issuing institution can further calculate the fees based on the accumulated issuing result information (post-issue settling function).

Let us now describe the operation of the embodiment constituted as above. In the securities issuing system using ID information according to this embodiment, the client 103 of each user institution is activated and operated by the operator to run the securities purchase offer software 104 installed in the client 103. As the securities purchase offer software 104 is activated, the client 103 is enabled to communicate with the server 101 of the securities issuing institution.

Next, the operator enters information concerning the securities desired to be purchased, enters into the client 103 the user's individual ID information and the ID information concerning said user institution, which will in turn be transmitted (displayed) from the client 103 to the server 101 of the securities issuing institution in order to present the securities purchase offer to the server 101 of the securities issuing institution.

The user's individual ID information and the ID information concerning said user institution to be transmitted to the server 101 of the securities issuing institution are the information stored in the ID recording medium 106 as the user's ID information.

Upon receiving the securities purchase offer from the client 103, the server 101 of the securities issuing institution searches if there are any unsold securities of the particular securities based on the information from the client 103, and establishes the securities purchase offer immediately if there are any unsold ones, or notifies the client 103 that there are no securities to be sold if that is the case. The securities purchase offer will not be established even if there are unsold securities are available if the ID information from client 103 was not properly transmitted.

When a securities purchase offer is established, the server 101 transmits the securities purchase information concerning the deal as well as the ID information concerning said securities purchase offer to the securities issuing machine 105 provided in the securities issuing site. This completes the securities purchase offer procedure.

The user who made a securities purchase offer goes to the securities issuing site with the ID recording medium 106 that stores the ID information. The user puts the ID recording medium 106 into the slot 105a of the securities issuing machine 105 of the securities issuing institution located at said securities issuing site.

The securities issuing machine 105 reads the information from ID recording medium 106, and collates the user's ID information read from the medium with the ID information received from the server 101, and issues the securities 107 based on the corresponding securities purchase offer information based on the collation result.

The securities issuing machine 105 further transmits the fact of the securities issue to the server 101 as the security issue result information. The issuing result information of the securities 107 transmitted from the securities issuing machine 105 to the server 101 is accumulated on the database in the server 101.

The server 101 of the securities issuing institution can further calculate the fees based on the accumulated issuing result information as well as calculate the fees for each user institution's client 103 or each user institution.

As can be seen from the above, since the client 103 is installed at each user institution, each user institution can more easily manage its securities purchasing status. In particular, as the client 103 can start up various other types of application software on its own, a wide range of applications, for example, causing the accounting application to read the securities purchase status data, are possible.

On the other hand, the securities issuing institution can provide various services for each user institution depending on this mode of the embodiment. For example, it is possible to arrange a post-issue lump sum settling based on the securities issuing result information or provide discount service depending on the number of securities issued for each user institution. This makes it possible for the securities issuing institution to monopolize, practically speaking, each user institution's securities purchase needs.

Also, according to this mode of the embodiment, processes within the institution such as charging forward and its registration become unnecessary as the fee settling procedures are done to the user institutions.

The client 103 has various functions related to the securities purchase offer such as the collating function for the securities purchase offers. Moreover, it is possible to arrange various services from the securities issuing institution to be transmitted from the server 101 of the securities issuing institution to the client 103.

Although the client 103 displays the ID information of each user institution and the individual user in said user institution directly to the securities issuing institution in this embodiment, the invention is not limited to it. Therefore, the client 103 in this invention can also present a securities purchase offer by displaying said ID information indirectly to said issuing institution by presenting a securities purchase offer displaying said ID information to the Bank of Japan or a financial institution. In this case, the Bank of Japan or the financial institution displays this ID information displayed by the client 103 to the securities issuing institution.

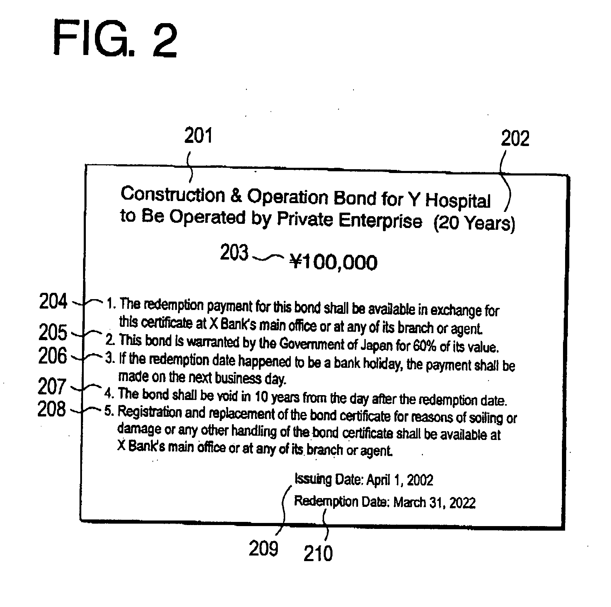

Fig. 2 shows a first example of securities issued by the securities issuing system according to the embodiment of the present invention.

It is a bond certificate on which a wording 201 of "Construction & Operation Bond for Y Hospital to Be Operated by Private Enterprise", a wording 202 of "20 Years", a wording 203 of "¥100,000", a wording 204 of "The redemption payment for this bond shall be available in exchange for this certificate at X Bank's main office or at any of its branch or agent", a wording 205 of "This bond is warranted by the Government of Japan for 60% of its value", a wording 206 of "If the redemption date happened to be a bank holiday, the payment shall be made on the next business day", a wording 207 of "The bond shall be void in 10 years from the day after the redemption date", a wording 208 of "Registration and replacement of the bond certificate for reasons of soiling or damage or any other handling of the bond certificate shall be available at X Bank's main office or at any of its branch or agent", a wording 209 of "Issuing Date: April 1, 2002", and a wording 210 of "Redemption Date: March 31, 2022" are written.

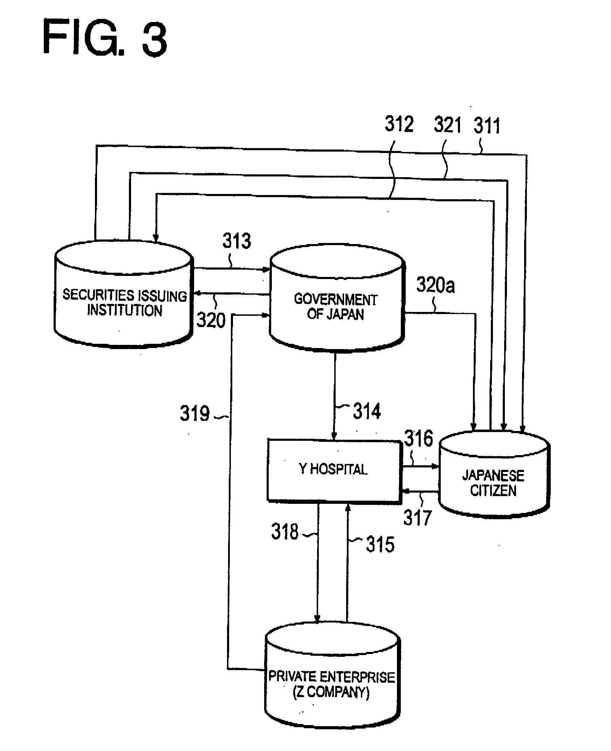

Fig. 3 is a diagram showing development and operation of a public work (hospital) based on the first example of securities (bonds) shown in Fig. 2.

As the citizens of Japan purchase the bonds (312) issued by the server (101) located in the securities issuing institution, using the client (103) located in the security company A or B, they are going to the securities issuing site and insert the ID recording medium (106) into the slots (105a) on the securities issuing machine (105). The securities issuing institution invests the funds provided by them in the Government of Japan as the fund for developing the hospital (313), the Government of Japan develops (designs and constructs) the Y Hospital using the fund as the capital (314), a commissioned private enterprise (Z Company) operates the Y Hospital (315), the private enterprise (Z Company) obtains profits and earnings from the operation of the Y Hospital (318), the Y Hospital provide medical services to the citizens of Japan (316), and the citizens of Japan pays medical fees to the Y Hospital (317).

The private enterprise (Z Company) pays a portion of the proceeds from the operation of the Y Hospital to the Government of Japan (319), and the Government of Japan pays back to the securities issuing institution the development funds it invested (320) and also pays the liabilities the government guaranteed up to a certain percentage of the principal and interest (320a), if the securities issuing institution becomes unable to fulfill its redemption liabilities of the bonds it owed (321) to the citizens of Japan.

While as this specification describes that a public work for infrastructure improvement can be planned singularly by a party or jointly by two or more parties, one of such cases is shown in Fig. 3, wherein the Government of Japan is to develop (design and construct) the Y Hospital (314).

The role of the Government of Japan in Fig. 3, therefore, can be replaced by a public or private entity of Japan, the government of a foreign country, a public or private entity of foreign nationality, either singularly by one of them or jointly by two or more of them.

While as this specification describes that a public work for infrastructure improvement can be executed singularly by a party or jointly by two or more parties, one of such cases is shown in Fig. 3, wherein a private enterprise (Z Company) is commissioned by the Government of Japan to operate the Z Hospital (315).

The role of the private enterprise (Z Company) in Fig. 3, therefore, can be replaced by the Government of Japan, a public or private entity of Japan, the government of a foreign country, a public or private entity of foreign nationality, either singularly by one of them or jointly by two or more of them.

The first example of the securities issued in the securities issuing system related to the embodiment shown in Fig. 2 will be described below in detail with reference to the development and operation of the public work (hospital) shown in Fig. 3.

The wording 201 of "Construction & Operation Bond for Y Hospital to Be Operated by Private Enterprise" indicates that this bond is a bond according to the embodiment of the present invention. The wording 201 clarifies that the bond is related to operation by a private enterprise 315 (provides healthcare services to Japanese citizens 316 and collects healthcare fees 318). The wording 201 also clarifies that the bond is a bond issued with an intention of acquiring funds (311) for the construction of Y Hospital (314).

Therefore, a Japanese citizen who is buying (312) the bond can clearly understand from the wording 201 that the funds being acquired by the bonds are invested (313) strictly into the construction of the Y Hospital (314). Thus, the Japanese citizen who is buying the bond can have a clear sense that "my money will be invested for the construction of Y Hospital."

Thus, according to this bond, contrary to other bonds where the buyers are not aware of what purposes the investments are used, the use of the funds acquired by the bond is clear so that the bond buyers' confidence can be enhanced, the bond buyers' desire for purchase can be increased, and ultimately promote investment of private funds to public works (313).

The wording 202 of "20 Years" indicates that the principal and the interest shall be redeemable (321) in 20 years from the issuing date. The wording 203 of "¥100,000" indicates the amount of fund (312) obtained by the issue of this bond. The wording 204 of "The redemption payment for this bond shall be available in exchange for this certificate at X Bank's main office or at any of its branch or agent" clarifies the locations of redemption. The wording 204 also clarifies that the principal and interest are paid in exchange for the bond certificate.

The wording 205 of "This bond is warranted by the Government of Japan for 60% of its value" clarifies that the Japanese government warrants (320, 320a) the bond issuer's principal and interest repayment liabilities to the Japanese citizen (buyer) within a certain limit. Although Z Company is liable to pay (319) to the bond issuer the cost of development of Y Hospital and its interest from the profit and revenue earned from the operation of Y Hospital (318) through the Japanese government, the operation of Y Hospital can deteriorate or fail.

However, the wording 205 warrants that 60% of the principal to be repaid by the bond issuer to the Japanese citizen (320, 320a). Thus, contrary to the bond based on the SPC Law, the bond buyers' confidence can be enhanced, and ultimately promote investment of private funds to public works (312). The warranty (320, 320a) by the Japanese government of the bond repayment liability is limited to a certain amount. Therefore, the Japanese government is not required to warrant the entire amount of the bond' s principal and interests according to this bond.

The wording 206 of "If the redemption date happened to be a bank holiday, the payment shall be made on the next business day" clarifies the payment shall be made on the next business day as it is not clear when the payment (321) of the principal and the interest will be made if the redemption date falls on a bank holiday.

The wording 207 of "The bond shall be void in 10 years from the day after the redemption date" clarifies that the bond shall be void (321) after a period.

The wording 208 of "Registration and replacement of the bond certificate for reasons of soiling or damage or any other handling of the bond certificate shall be available at X Bank's main office or at any of its branch or agent", clarifies how the bond certificate is handled in case of need for registration and replacement of the bond certificate for reasons of soiling or damage.

The wording 209 of "Issuing Date: April 1, 2002" clarifies the issuing date (311). The wording 210 of "Redemption Date: March 31, 2022" clarifies the redemption date (321).

The abovementioned bond is according to one of the embodiments of the present invention. Therefore, the bonds according to the present invention are not limited to the abovementioned bond. For example, the wording 201 can be anything as long as the particular bond is a bond related to a certain project finance, for example, they can be "Construction Bond for T Road Operated by Private Enterprise", "Construction Bond for R Senior Citizen's Home", and "Construction & Operation Bond for W Public Housing Project."

Moreover, the degree of warranty of repayment liabilities by the national government indicated in the wording 205 is not limited to "60%" but rather can be any degree or ratio warranted by the a national or local government, for example, 10, 20 or 50%.

Further, the entity that warrants the repayment liabilities in the wording 205 does not have to be "Japan." The entity that warrants the repayment liabilities in the wording 205 can be any arbitrary country in the world, e.g., U.S., China, South Korea, U.K., Japan and U.S., or South Korea and U.K.

Furthermore, the warranting entity in the wording 205 can be an arbitrary local government(s) or an entity that is equivalent to a local government in the world, e.g., Tokyo, Osaka, Los Angeles, Beijing, Tokyo and Los Angeles, or Osaka and San Francisco. The warranting entity in the wording 205 can be either a single or multiple private enterprises, e.g., J Company or L Company and G Bank.

Furthermore, the warranting entity in the wording 205 can be a combination of a national government and a local government, e.g., Japan and Los Angeles, or a combination of a national government, a local government and a private enterprise, e.g., Osaka, U.S., and L Company.

Moreover, the buyer of the securities issued by the securities issuing system according to the invention is not limited to a Japanese citizen. A citizen of an arbitrary country of the world, such as a U.S., Chinese, South Korean, and U.K. citizen can be the buyer of the securities issued by the securities issuing system according to the invention.

The "securities issuing institution" can be a private urban development organization.

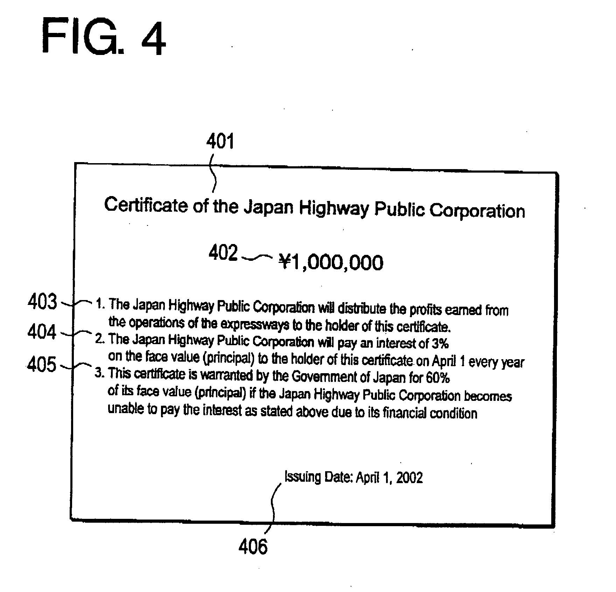

Fig. 4 shows a second example of securities issued by the securities issuing system according to the embodiment of the present invention.

It is a securities certificate on which a wording 401 of "Certificate of the Japan Highway Public Corporation", a wording 402 of "¥1,000,000", a wording 403 of "The Japan Highway Public Corporation will distribute the profits earned from the operations of the expressways to the holder of this certificate", a wording 404 of "The Japan Highway Public Corporation will pay an interest of 3% on the face value to the holder of this certificate on April 1 every year" a wording 405 of "This certificate is warranted by the Government of Japan for 60% of its face value (principal) if the Japan Highway Public Corporation becomes unable to pay the interest as stated above due to its financial condition", and a wording 406 of "Issuing Date: April 1, 2002."

The wording of 401 "Certificate of the Japan Highway Public Corporation" indicates that it is the certificate related to the expressways operated by the Japan Highway Public Corporation. It can be seen from this wording 401 that the certificate was issued by the Japan Highway Public Corporation for obtaining funds.

The wording 402 of "¥1,000,000" indicates the amount of fund obtained by the issue of this certificate. The wording 403 of "The Japan Highway Public Corporation will distribute the profits earned from the operations on the expressways to the holder of this certificate" indicates that dividends will be paid to the holder of the certificate by the Japan Highway Public Corporation.

The wording 404 of "The Japan Highway Public Corporation will pay an interest of 3% on the face value to the holder of this certificate on April 1 every year" indicates that interests will be paid to the holder of the certificate by the Japan Highway Public Corporation. Therefore, an interest of ¥30,000 will be paid to the holder of the certificate every year.

The wording 405 of "This certificate is warranted by the Government of Japan for 60% of its face value (principal) if the Japan Highway Public Corporation becomes unable to pay the interest as stated above due to its financial condition" clarifies that the Government of Japan warrants the repayment of the face value (principal) of the certificate to a certain limit.

Thus, even if the Japan Highway Public Corporation falls into a financial trouble after issuing this certificate and becomes unable to pay the interest according to the interest wording on the certificate, the holder is guaranteed of repayment of at least 60% of the face value (principal) by the Government of Japan. The certificate therefore can make the buyer of the certificate feel more secured and enhance the prospective buyer's desire to purchase the certificate.

Said guaranty by the Government of Japan is limited to a certain level. Therefore, the Government of Japan is not required to repay the total face value (principal) of the certificate.

The wording 406 of "Issuing Date: April 1, 2002" clarifies the issuing date.

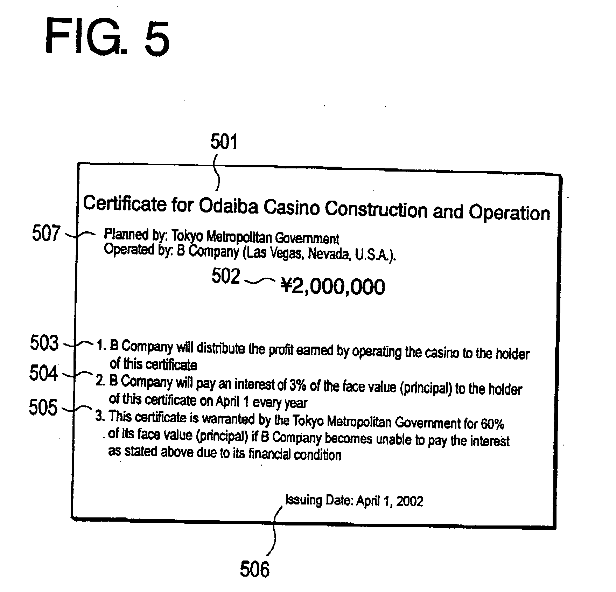

Fig. 5 shows a third example of securities issued by the securities issuing system according to the embodiment of the present invention.

A wording 501 of "Certificate for Odaiba Casino Construction and Operation", a wording 502 of "¥2,000,000", a wording 503 of "B Company will distribute the profit earned by operating the casino to the holder of this certificate", a wording 504 of "B Company will pay an interest of 3% of the face value to the holder of this certificate on April 1 every year", a wording 505 of "This certificate is warranted by the Tokyo Metropolitan Government for 60% of its face value (principal) if B Company becomes unable to pay the interest as stated above due to its financial condition", a wording 506 of "Issuing Date: April 1, 2002", and a wording of 507 "Planned by: Tokyo Metropolitan Government Operated by: B Company (Las Vegas, Nevada, U.S.A.)."

The wording 501 of "Certificate for Odaiba Casino Construction and Operation" indicates that the certificate concerns the fund acquisition concerning the project of constructing and operating Odaiba Casino. The wording of 507 "Planned by: Tokyo Metropolitan Government Operated by: B Company (Las Vegas, Nevada, U.S.A.)" indicates the planner and operator of Odaiba Casino. From this wording 507, the person contemplating the purchase of the certificate can learn that the Tokyo Metropolitan Government is the project planner of the construction and operation of Odaiba Casino, and B Company in Las Vegas is the operator of the casino.

The wording 502 of "¥2,000,000" indicates the amount of fund obtained by the issue of this certificate. The wording 503 of "B Company will distribute the profit earned by operating the casino to the holder of this certificate" indicates that B Company pays dividends to the holder of the certificate.

The wording 504 of "B Company will pay an interest of 3% of the face value to the holder of this certificate on April 1 every year" indicates that interests will be paid to the holder of the certificate by B Company. Therefore, an interest of ¥60,000 will be paid to the holder of the certificate every year.

The wording 505 of "This certificate is warranted by the Tokyo Metropolitan Government for 60% of its face value (principal) if B Company becomes unable to pay the interest as stated above due to its financial condition" clarifies that the Tokyo Metropolitan Government warrants the repayment of the face value (principal) of the certificate to a certain limit.

Thus, even if B Company falls into a financial trouble after issuing this certificate and becomes unable to pay the interest according to the interest wording on the certificate, the holder is guaranteed of repayment of at least 60% of the face value (principal) by the Tokyo Metropolitan Government. The certificate therefore can make the buyer of the certificate feel more secured and enhance the prospective buyer's desire to purchase the certificate.

Said guaranty by the Tokyo Metropolitan Government is limited to a certain level. Therefore, the Tokyo Metropolitan Government is not required to repay the total face value (principal) of the certificate.

The wording 506 of "Issuing Date: April 1, 2002" clarifies the issuing date.

The certificates described above represent the first , the second and the third examples of securities issued in the securities issuing system according to the embodiment of the present invention. The securities related to the present invention are not limited to the above examples. For example, the wordings 401 and 501 can be Certificate of X Department (Shinjuku Branch), P Airport Certificate, Certificate for W Public Housing Project, or anything as long as they clarify that the certificates of securities are related to the business operator's acquisition of funds

The limit of guaranty indicated in the wordings 405 and 505 is not limited to 60% but rather can be any degree or ratio warranted by a national or local government, for example, 10, 20 or 50%. Further, although the entity that warrants the repayment liabilities is the Government of Japan in the wording 405 and the Tokyo Metropolitan Government in the wording 505, it does not have to be limited to them. The warrantor in the wording 405 or 505 can be any arbitrary country in the world such as U.S., China, South Korea, U.K., Japan and U.S., or South Korea and U.K.

Furthermore, the warrantor in the wordings 405 and 505 can be an arbitrary local government(s) or public organizations equivalent to them in the world such as Hokkaido, Osaka, Los Angeles, Beijing, Tokyo and Los Angeles, or Osaka and San Francisco. The buyer of the bond according to the invention is not limited to a Japanese citizen. A single or multiple private enterprises such as J Company, L Company and G Bank, etc., can also be a guarantor in the wordings 405 and 505. Moreover, a combination of a national government and a local government, such as Japan and Los Angeles, or a combination of a national government, a local government and a private enterprise, such as Osaka, United States, and L Company can be a guarantor in the wordings 405 and 505.
Furthermore, the buyer of the securities according to this invention does not have to be a Japanese citizen. A citizen of an arbitrary country of the world, such as a U.S., Chinese, South Korean or U.K. citizen can be a buyer of the securities according to the invention.

According to the present invention, those who are buying bonds can be assured for the repayment as the principal and interests repayment liabilities of the bond issuers are warranted to certain fixed limits either the national Government of Japan, a public entity, or a private enterprise of Japanese nationality, as well as either the national government of a foreign country, a public entity, or a private enterprise of foreign nationality, either singularly by one of them, or jointly by two or more of them, so that the bond buyers can have more confidence in buying the bonds as they are guaranteed to be able to collect the principal and interests safely to certain fixed limits even when the private enterprise fails in the operation of said public works.

As such, it is obvious that the redemption claim materializing after the due date for a bond issued according to the present invention is backed by strong credibility. Therefore, the present invention can be an effective means of cultivating unutilized funds held by private investors or citizens by providing unique bonds.
The bonds according to the present invention will dig up latent private funds in private sectors to be invested into public works. Therefore, the present invention will help the national as well as local governments of various countries of the world to improve infrastructures such as roads and healthcare facilities even under a tight financial condition.
Moreover, investors can purchase the new financial products according to the present invention that are neither stocks nor bonds, and seek profits in a new financial market that did not exist before, while business operators can obtain funds using these securities that are neither stocks nor bonds.

## Claims

1. A securities issuing system comprising a server provided in a securities issuing institution, a client provided in a user institution, and a securities issuing machine provided at a securities issuing site; wherein
said server comprises:
a securities information transmitting means for transmitting securities information indicating what kind of securities are being issued to said client;
a securities purchase offer information receiving means for receiving securities purchase offer information concerning request for purchasing securities from said client which has received the securities information transmitted by said securities information transmitting means directly or indirectly through a server of financial institution;
a securities issuing means for issuing securities related to the securities purchase offer information received by said securities purchase offer information receiving means;
an ID information receiving means for receiving user's individual ID information, which is the ID information of a user of said user institution, as well as user institution ID information, which is the ID information of said user institution, from said clients directly or through the server of financial institution;
a security issuing information and user's individual ID information transmitting means for transmitting the securities issuing information related to the securities issued by said securities issuing means and the user's individual ID information received by said ID information receiving means to said securities issuing machine;
a securities issuing result information receiving means for receiving securities issuing result information, which is the result of issuing securities, from said securities issuing machine;
a securities issuing result information accumulating means for accumulating the securities issuing result information received by said securities issuing result information receiving means; and
a calculating means for calculating fees to be charge to the user for each user institution based on the user institution ID information received by said ID information receiving means;
said client comprises:
a security purchase offer transmitting means for transmitting the securities purchase offer information to said server directly or indirectly through the server of the financial institution; and
an ID information transmitting means for transmitting the user institution ID information and the user's individual ID information directly or indirectly through the server of the financial institution; and
said securities issuing machine comprises:
a securities issuing information receiving means for receiving the securities issuing information from said server;
a user's individual ID information receiving means for receiving the user's individual ID information from said server;
an ID reading means for reading the user's individual ID information from an ID recording medium, which stores said user's individual ID information;
a collating means for collating the user's individual ID information received by said user's individual ID information receiving means with the user's individual ID information read by said ID reading means;
a securities issuing means for issuing securities related to the securities issuing information received by said securities issuing information receiving means based on the result of the collation by said collating means; and
a securities issuing result information transmitting means for transmitting the securities issuing result information, which is the result of issuing securities by said securities issuing means, to said server.

2. A securities issuing system described in claim 1, wherein
said securities are bonds for obtaining funds from private sectors, which are issued by said securities issuing institution in order to promote investments of private funds into public works for improving infrastructures, carrying a wording that the Government of Japan, a public entity, or a private enterprise of Japanese nationality, as well as the national government of a foreign country, a public entity, or a private enterprise of foreign nationality, either singularly by one of them, or jointly by two or more of them, serves as a guarantor or guarantors within a predetermined limit for principal reimbursement and interest payment liabilities to be born by said securities issuing institution, wherein
said public works for improving infrastructures are:
planned by either the national Government of Japan, a public entity, or a private enterprise of Japanese nationality, as well as either the national government of a foreign country, a public entity, or a private enterprise of foreign nationality, either singularly by one of them, or jointly by two or more of them; and
executed by either the national Government of Japan, a public entity, or a private enterprise of Japanese nationality, as well as either the national government of a foreign country, a public entity, or a private enterprise of foreign nationality, either singularly by one of them, or jointly by two or more of them.

3. A securities issuing system described in claim 1, wherein said securities are securities issued for acquiring funds by a business operator in exchange for said certificates of securities, on which written are:
a dividend wording describing that said business operator will distribute profits obtained as a result of business activities to persons who own said certificates of securities;
an interest wording describing that said business operator will pay interests periodically to said persons who own said certificates of securities; and
a warranty wording describing that that the Government of Japan, a public entity, or a private enterprise of Japanese nationality, as well as the national government of a foreign country, a public entity, or a private enterprise of foreign nationality, either singularly by one of them, or jointly by two or more of them, serves as a guarantor or guarantors within a predetermined limit for principal reimbursement and interest payment liabilities to be born by said securities issuing institution in case said business operator becomes unable to pay the interests according to the interest payment wording due to reasons such as a business failure.

4. A securities issuing system described in claim 1, wherein said securities issuing institution is a private urban development organization.

5. A method for forming new market comprising making a person who has never purchased securities purchase securities issued by a securities issuing system described in claim 1, and trade those securities in the market as needed.

6. A security issuing machine (105) comprising:
a first input for receiving security issuing information from a server (101);
a second input for receiving user's individual ID information from the server (101);
an ID reader (105a) for reading the user's individual ID information from an ID recording medium (106) which stores the user's individual ID information;
a collation means for collating the user's individual ID information received by the second input with the user's individual ID information read by the ID reader (105a);
a first output for issuing security certificates (107) related to the security issuing information received by the first input based on the result of the collation by the collating means; and
a second output for transmitting a security issuing result information, which is the result of issuing security certificates by the first output, to the server (101).
